(19) Europäisches Patentamt
European Patent Office
Office européen des brevets

(11) Veröffentlichungsnummer: **0 072 515**
**B1**

# (12) EUROPÄISCHE PATENTSCHRIFT

(45) Veröffentlichungstag der Patentschrift: **13.08.86**

(51) Int. Cl.⁴: **A 01 N 57/12** // (A01N57/12, 53:00, 47:22)

(21) Anmeldenummer: **82107170.1**

(22) Anmeldetag: **09.08.82**

(54) **Schädlingsbekämpfungsmittel, ihre Herstellung und Verwendung.**

(30) Priorität: **18.08.81 DE 3132610**

(43) Veröffentlichungstag der Anmeldung: **23.02.83 Patentblatt 83/8**

(45) Bekanntmachung des Hinweises auf die Patenterteilung: **13.08.86 Patentblatt 86/33**

(84) Benannte Vertragsstaaten: **AT BE CH DE FR GB IT LI NL SE**

(56) Entgegenhaltungen:
**DE-A-2 928 465**

**RESEARCH DISCLOSURE, Nr. 207, Juli 1981, Seiten 298-299, Nr. 20.736, Homewell, Havant, Hampshire (GB); "Pesticide mixtures for control of insect pests".**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Behrenz, Wolfgang, Dr., Untergründemich 14, D-5063 Overath (DE)**
Erfinder: **Schütte, Manfred, Dr., Am Theuspfad 76, D-5024 Pulheim (DE)**

**EP 0 072 515 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue synergistische Mischungen aus den bekannten Wirkstoffen 2,2-Dimethyl-3-dichlorvinyl-cyclopropancarbonsäure-α-cyano-3-phenoxy-4-fluorbenzylester oder 2,2-Dimethyl-3-dibromvinylcyclopropancarbonsäure-α-cyano-3-phenoxybenzylester, O,O-Dimethyl-O-2,2-dichlorvinylphosphat (Dichlorvos) und O-Isopropoxyphenyl-N-methylcarbamat (Propoxur), diese Wirkstoffkombinationen enthaltende Formulierungen (Mittel), deren Herstellung und Verwendung zur Bekämpfung von Arthropoden aus dem Haushalt- und Hygienebereich.

Es ist bereits bekannt, daß Propoxur und Dichlorvos eine gute Wirkung gegen Insekten und Spinnentiere besitzen. Diese Wirkstoffe werden daher seit vielen Jahren mit großem Erfolg zur Schädlingsbekämpfung insbesondere zur Bekämpfung von Hausungeziefer eingesetzt. Es sind ferner bereits synergistische Mischungen aus 2,2-Dimethyl-3-dichlorvinyl-cyclopropoancarbonsäure-α-cyano-3-phenoxy-4-fluorbenzylester bzw. 2,2-Dimethyl-3-dibromvinyl-cyclopropancarbonsäure-α-cyano-3-phenoxybenzylester und Dichlorvos beschrieben worden (Research Disclosure Nr. 207, Juli 1981, S. 298—299). Durch aufkommende Resistenz erleiden die bekannten Mittel jedoch, wie bisher alle in der praktischen Anwendung befindlichen Insektizide im Laufe der Zeit gewisse Wirkungseinbußen, die in bestimmten Fällen ihre Einsatzfähigkeit einschränkem können. Die Folge davon ist, daß zur Bekämpfung restistenter Schädlinge die benötigten Anwendungskonzentrationen und Aufwandmengen immer weiter erhöht werden müssen, um noch eine befriedigende Wirkung zu erzielen, bis schließlich die Grenze erreicht ist, an der der Einsatz vor allem aus ökonomischen und anwendungstechnischen Gründen nicht mehr sinnvoll oder möglich ist. Besonders problematisch wird die Ausbildung resistenter Insektenpopulationen dadurch, daß sich ihre Resistenz nicht nur gegen ein bestimmtes Insektizid richtet, sondern in der Regel alle Wirkstoffe aus der gleichen Wirkstoffklasse oder sogar aus mehreren in der Wirkung ähnlichen Wirkstoffklassen mit erfaßt werden.

Der Lösung der Aufgabe, geeignete Mittel zur Bekämpfung resistenter Schädlinge im Haushalt- und Hygienebereich zu entwickeln, kommt daher eine besonders große Bedeutung zu.

Es wurde nun gefunden, daß Mischungen aus den bekannten Wirkstoffen

I. Einem Pyrethroid der Formel I

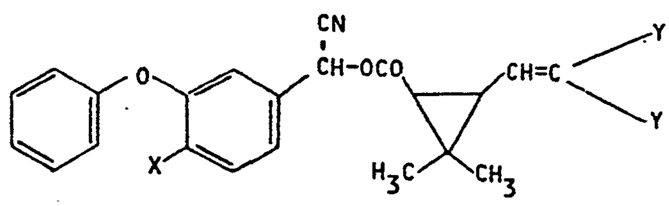

(I)

in welcher

a) X für Fluor und Y für Chlor stehen (Wirkstoff 1) oder

b) X für Wasserstoff und Y für Brom stehen (Wirkstoff 2), wobei jeweils die Stereoisomeren (Enantiomeren, Diastereomeren) dieser Verbindungen sowie deren Mischungen eingeschlossen sein sollen und

II. O,O-Dimethyl-O-(2,2-dichlorvinyl)-phosphat (common name: Dichlorvos) der Formel II

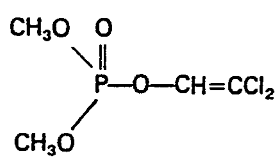

(II)

("Wirkstoff 3")

und

III. 2-Isopropoxy-phenyl-N-methylcarbamat (common name: Propoxur) der Formel III

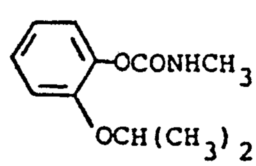

(III)

("Wirkstoff 4")

eine besonders hohe Wirkung gegen Arthropoden, insbesondere gegen Insekten und Spinnentiere aufweisen und außerdem Eigenschaften haben, welche ihre Verwendung im Haushalt- und Hygienebereich in hervorragender Weise ermöglichen.

Die Wirstoffe 2, 3 und 4 sind Wirkstoffe bekannter Handelsprodukte und der Wirkstoff 1 ist aus der Deutschen Offenlegungsschrift 2 709 264 und der US-Patentschrift 4 218 469 bekannt.

Überraschenderweise ist die Wirksamkeit der erfindungsgemäßen Wirkstoffkombination aus den speziellen Wirkstoffen 1 oder 2, 3 und 4 wesentlich höher als die Summe der Wirksamkeit der Einzelverbindungen und der bekannten Mischungen gegen die für den Haushalt- und Hygienebereich wichtigen Schädlinge. Es liegt also hier bei den speziellen erfindungsgemäßen Kombinationen ein echter synergistischer Effekt auch gegen stark resistente Haushalt- und Hygieneschädlinge vor.

Gegenstand der vorliegenden Erfindungen sind somit Mischungen aus den Wirkstoffen 1 oder 2, 3 und 4 und vorzugsweise diese Mischungen enthaltende Formulierungen (Schädlingsbekämpfungsmittel), insbesondere die Aerosole und Ölsprühmittel, ihre Herstellung und Verwendung zur Bekämpfung von Arthropoden, insbesondere von Insekten und Spinnentieren, ganz besonders bevorzugt von Insekten, welche im Haushalt- und Hygienebereich vorkommen.

Die Mengenverhältnisse der Wirkstoffe untereinander können in den erfindungsgemäßen Wirkstoffmischungen bzw. Schädlingsbekämpfungsmitteln in relativ großen Bereichen schwanken. Um optimale Ergebnisse zu erreichen, liegen die Mengenverhältnisse (Gewichtsteile) der drei Komponenten Wirkstoff 1 oder 2, Wirkstoff 3 und Wirkstoff 4 zwischen 1:100:100 und 1:1:1, insbesondere zwischen 1:100:100 und 1:10:10. Dabei kann auch das Mengenverhältnis der Komponenten Wirkstoff 3 und 4 zueinander im dem angegebenen Rahmen variieren. Diese Mengenverhältnisse müssen selbstverständlich nicht ganzen Zahlen entsprechen.

Besonders bevorzugt sind Wirkstoffgemische bzw. Schädlingsbekämpfungsmittel, in welchen die Mengenverhältnisse (Gewichtsteile) der Wirkstoffe 1 oder 2 und der Wirkstoffe 3 und 4 bei etwa 1:20:20, etwa 1:30:40, etwa 1:50:100 oder etwa 1:100:100 liegen.

Die erfindungsgemäßen Schädlingsbekämpfungsmittel für den Haushalts- und Hygienebereich besitzen eine ausgezeichnete knock-down-Wirkung und Mortalität auf die verschiedensten schädlichen Insekten und Spinnentiere, insbesondere Insekten.

Dabei kommt der schnellen knock-down-Wirkung besonders bei der Bekämpfung von Hausungeziefer eine große Bedeutung zu, da der Anwender auf eine schnelle Beseitigung der Belästigung, vor allem aus hygienischen Gründen, einen besonderen Wert legt. Die neuen Schädlingsbekämpfungsmittel sind gegenüber den gegen Carbamate, Phosphor(phosphon)säureester und Pyrethroide resistenten Schädlingen viel wirksamer und können daher in weit geringeren Mengen bzw. Konzentrationen und mit besserem Erfolg eingesetzt werden als Schädlingsbekämpfungsmittel, die nur Verbindungen der Formel I oder Dichlorvos oder Propoxur enthalten. Die Schädlingsbekämpfungsmittel müssen in ihren gesamten Eigenschaften speziell auf den Verbraucherkreis aus dem Haushalt- und Hygienebereich abgestimmt werden, was eine ganz spezielle Auswahl der Wirkstoffe (und auch der Zusatzstoffe) erforderlich macht.

Außer einer schnellen knock-down-Wirkung zeichnen sich die erfindungsgemäßen Wirkstoffkombinationen bzw. Schädlingsbekämpfungsmittel auch durch eine langanhaltende Residualwirkung auf den verschiedensten Unterlagen aus.

Als Wirkstoff 1 ist der 2,2-Dimethyl-3-dichlorvinyl-cis/trans-cyclopropancarbonsäure-α-cyano-3-phenoxy-4-fluorbenzylester und als Wirkstoff 2 der 2,2-Dimethyl-3-dibromvinyl-cyclopropancarbonsäure-1R-cis-α-cyano-3-phenoxybenzylester bevorzugt.

Zu den oben erwähnten Schädlingen gehören beispielsweise folgende Schädlinge:

Aus der Ordnung der Thysanura z.B. Lepisma saccharina.

Aus der Ordnung der Orthoptera z.B. Blatta orientalis, Periplaneta americana, Leucophaea maderae, Blattella germanica, Aceta domesticus.

Aus der Ordnung der Dermaptera z.B. Forficula auricularia.

Aus der Ordnung der Isoptera z.B Reticulitermes spp.

Aus der Ordnung der Heteroptera z.B. Cimex lectularius, Rhodnius prolixus, Triatoma spp.

Aus der Ordnung der Lepidoptera z.B. Ephestia Ruehniella und Galleria mellonella.

Aus der Ordnung der Coleoptera z.B. Anobium punctatum, Rhizopertha dominica, Bruchidius obtectus, Acanthoscelides obtectus, Hylotrupes bajulus, Oryzaephilus surinamensis, Sitophilus spp., Dermestes spp., Trogoderma spp., Anthrenus spp., Attagenus spp., Lyctus spp., Ptinus spp., Niptus hololeucus, Gibbium psylloides, Tribolium spp., Tenebrio molitor.

Aus der Ordnung der Hymenoptera z.B. Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Stomoxys spp., Tabanus spp.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Boophilus spp., Rhipicephalus spp., Amblyomma spp., Hyalomma spp., Ixodes spp.

Die Wirkstoffkombinationen können in die im Haushaltund Hygienebereich üblichen Formulierungen übergeführt werden.

Wie bereits erwähnt wurde, sind als Formulierungen für die Wirkstoffkombinationen Aerosole (insbesondere Sprühdosen) und Ölsprühmittel bevorzugt.

Aerosol-Rezepturen setzen sich vorzugsweise zusammen aus den genannten Wirkstoffkombinationen, Lösungsmitteln wie niedere Alkohole (z.B. Methanol, Ethanol, Propanol, Butanol), Ketone wie z.B. Aceton, Methylethylketon, Paraffinkohlenwasserstoffe (z.B. Kerosene) mit Siedebereichen von etwa 50 bis 250°C, chlorierte Kohlenwasserstoffe wie z.B Methylenchlorid oder 1,1,1-Trichlorethan, aromatische Kohlenwasserstoffe wie Toluol, Xylol, Wasser, ferner Hilfsstoffe wie Emulgatoren wie Sorbitanmonooleat, Oleylethoxylat mit 3—7 Mol Ethylenoxid, Fettalkoholethoxylat, Parfümöle wie etherische Öle, Ester aus mittleren Fettsäuren mit niederen Alkoholen, aromatische Carbonylverbindungen, gegebenenfalls Stabilisatoren wie Natriumbenzoat, amphotere Tenside, niedere Epoxide, Triethylorthoformiat und im Bedarfsfalle den Triebgasen wie Propan, Butan, Fluorchlorkohlenwasserstoffe, Dimethylether, Kohlendioxid, Distickstoffoxid bzw. Gemische aus diesen Gasen.

Die Aerosol-Mischung als Ganzes befindet sich bei Sprühdosen in einer geeigneten, ausreichend druckfesten Verpackung. Das Material dieser Verpackung kann sein Metall (Eisen verzinnt oder Aluminium) mit oder ohne separatem Innenschutzlack, ferner sind Glas mit oder ohne Kunststoffummantelung und bestimmte Kunststoffe geeignet (z.B. Polyamid, Polypropylen).

Zur Aerosolverpackung gehört ein geeignetes, selbsttätig schließendes Ventil mit für den Anwendungsfall optimierten technisch-physikalischen Parametern wie Düsenöffnungen, Düsenart, Dichtungsmaterialien usw. Zur Sicherung gegen unbeabsichtigtes Betätigen des Ventils ist vorzugsweise die Aerosolverpackung mit einer geeigneten Schutzkappe versehen.

Die Ölspray-Formulierungen unterscheiden sich von den Aerosolrezepturen grundsätzlich dadurch, daß keine Treibgase verwendet werden, da zur Zerstäubung in der Regel mechanische Pumpen vorgesehen sind. Die zur Anwendung kommenden Lösungsmittel und sonstige Hilfsmittel unterscheiden sich praktisch nicht von den bei Aerosolrezepturen gebräuchlichen Mitteln.

Das Packmaterial für diese Formulierungen ist weit weniger kritisch, da grundsätzlich nur Dichtigkeit und Beständigkeit gegen das Füllgut verlangt werden. So sind geeignet Metalle wie Eisen, vorwiegend verzinnt und/oder lackiert, Aluminium usw. Ferner eignen sich Glas und bestimmte Kunststoffe wie Polyvinylchlorid, Polyethylen, Polypropylen.

Die Auswahl der jeweiligen Lösungsmittel und sonstigen Zusatzstoffe, sowie der Art der Sprühdosen und der Verpackung richtet sich nach den vorhandenen Materialien, nach den speziellen Einsatzbereichen sowie den Anforderungen an die Lagerfähigkeit der Produkte und kann durch den Fachmann unter Anwendung seines Fachwissens und gegebenenfalls mit Hilfe von einfachen allgemein bekannten Untersuchungsmethoden leicht getroffen werden.

Die Formulierungen enthalten im allgemeinen zwischen 0,5 und 90 Gew.-% der Wirkstoffkombinationen vorzugsweise zwischen 0,5 und 60%.

Die Anwendung geschieht in einer den Anwendungsformen angepaßten üblichen Weise.

Aufgrund ihrer besonderen Eigenschaften können die erfindungsgemäßen Wirkstoffgemische bzw. ihre Formulierungen in einem breiten Bereich zur Bekämpfung von Arthropoden, insbesondere von Insekten eingesetzt werden. Bevorzugte Einsatzgebiete sind die gewerbliche und private Hygiene (z.B. Schulen, Krankenhäuser, nahrungsmittelverarbeitende Betriebe und Haushalte), der gewerbliche und private Vorratsschutz (z.B. Nahrungsmitteläger) sowie der Einsatz in der Landwirtschaft und Tierhaltung (z.B. Stallfliegenbekämpfung).

Die Herstellung der erfindungsgemäßen Schädlingsbekämpfungsmittel soll anhand der folgenden Beispiele erläutert werden.

Formulierungsbeispiele:

| 1) | Sprayformulierung | Gewichtsteile |
|---|---|---|
| | Wirkstoff 1 | 0,025 |
| | Wirkstoff 3 | 1,0 |
| | Wirkstoff 4 | 1,0 |
| | Methylenchlorid | 25,0 |
| | Desodoriertes Kerosen | 12,37 |
| | Parfümöl | 0,03 |
| | Stabilisator (wie Beispiel 1) | 0,1 |
| | Treibmittel: Propan/Butan (15:85) | 60,475 |

| | | |
|---|---|---|
| 2) | Sprayformulierung | Gewichtsteile |
| | Wirkstoff 2 | 0,03 |
| | Wirkstoff 3 | 1,0 |
| | Wirkstoff 4 | 1,0 |
| | Methylenchlorid | 25,0 |
| | Desodoriertes Kerosen | 12,37 |
| | Parfümöl | 0,03 |
| | Stabilisator (wie Beispiel 1) | 0,1 |
| | Treibmittel: Propan/Butan (15:85) | 60,47 |
| 3) | Ölsprühmittelformulierung | Gewichtsteile |
| | Wirkstoff 1 | 0,02 |
| | Wirkstoff 3 | 0,5 |
| | Wirkstoff 4 | 1,0 |
| | Xylol | 2,0 |
| | Isopropanol | 10,0 |
| | Desodoriertes Kerosen | 86,48 |
| 4) | Ölsprühmittelformulierung | Gewichtsteile |
| | Wirkstoff 2 | 0,01 |
| | Wirkstoff 3 | 1,0 |
| | Wirkstoff 4 | 0,5 |
| | Xylol | 2,0 |
| | Isopropanol | 10,0 |
| | Desodoriertes Kenosen | 86,49 |

Die Wirksamkeit der erfindungsgemäßen Wirkstoffkombinationen soll anhand der folgenden Beispiele erläutert werden:

Biologische Beispiele

Sprühdosen oder Ölsprühmittel, die entweder nur Wirkstoff 1 oder Wirkstoff 2 oder Wirkstoff 3 oder Wirkstoff 4 enthalten, werden ebenso wie Sprühdosen oder Ölsprühmittel, die Wirkstoffe 1 oder 2 und 3 und 4 in Kombinationen enthalten, in Räumen von 30 $m^3$ Inhalt versprüht. Zuvor wurden in den Räumen 3 Drahtkäfige mit je 20 gegen Carbamate, Phosphor-(phosphon)-säureester und Pyrethroide stark resistente Musca domestica (♂♂, Stamm Hans) aufgehängt. Nach der Ausbringung (durch Versprühen) von jeweils 17 g der Formulierungen pro Raum, wurden die Räume geschlossen und bis zu einer Stunde die Wirkung auf die Fliegen durch ein Fenster fortlaufend kontrolliert. Getestet wurde nach wieviel Minuten 50% der Versuchstiere in Rückenlage (known down) gefallen sind (ergibt: K.D. 50-Werte). Die ermittelten Zahlen enthält die nachfolgende Tabelle:

Tabelle Versuchsfliegen
Musca domestica (Stamm Hans, Männchen, multiresistent)

| Wirkstoffe | %(Gewicht)Wirkstoffe in der Formulierung | knock down-Wirkung in Minutennach Ausbringung KD 50 |
|---|---|---|
| 1 | 0,025—0,1 | keine |
| 2 | 0,01—0,08 | keine |
| 3 | 0,5—1,0 | keine |
| 4 | 0,5—2,0 | keine |
| 1 + 3 + 4 | 0,025 + 1,0 + 1,0 | 13 |
| 2 + 3 + 4 | 0,03 + 1,0 + 1,0 | 11 |

"Keine" bedeutet, daß innerhalb 1 Stunde eine KD 50 nicht erreicht wurde.

**Patentansprüche**

1. Wirkstoffmischungen bestehend aus

I) einem Pyrethroid der Formel

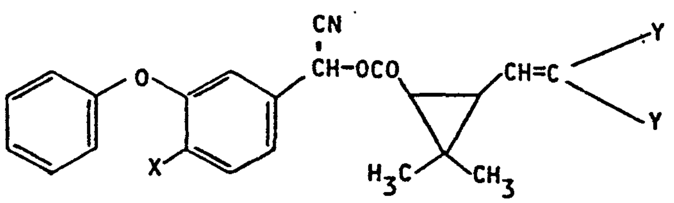

(I)

in welcher

a) X für Fluor und Y für Chlor stehen ("Wirkstoff 1") oder

b) X für Wasserstoff und Y für Brom stehen ("Wirkstoff 2"), wobei jeweils die Stereoisomeren (Enantiomeren und Diastereomeren) dieser Verbindung und deren Mischungen eingeschlossen sein sollen und

II. O,O-Dimethyl-O-(2,2,-dichlorvinyl)phosphat "Wirkstoff 3") und

III. 2-Isopropoxy-phenyl-N-methylcarbamat ("Wirkstoff 4").

2. Wirkstoffmischungenen gemäß Anspruch 1, in welchen die Mengenverhältnisse (Gewichtsteile) der Wirkstoffe 1 oder 2, 3 und 4 zwischen 1:100:100 und 1:1:1 liegen.

3. Wirkstoffmischungen gemäß Anspruch 1, in welchen die Mengenverhältnisse (Gewichtsteile) der Wirkstoffe 1 oder 2, 3 und 4 zwischen 1:100:100 und 1:10:10 liegen.

4. Wirkstoffmischungen gemäß Anspruch 1, in welchen die Mengenverhältnisse (Gewichtsteile) der Wirkstoffe 1 oder 2, 3 und 4 bei etwa 1:20:20, etwa 1:20:40, etwa 1:50:100 oder etwa 1:100:100 liegen.

5. Schädlingsbekämpfungsmittel für den Haushalt- und Hygienebereich, gekennzeichnet durch den Gehalt an einer Wirkstoffmischung gemäß den Ansprüchen 1 bis 4.

6. Aerosole und Ölsprühmittel für den Haushalt- und Hygienebereich, gekennzeichnet durch den Gehalt an einer Wirkstoffmischung gemäß den Ansprüchen 1 bis 4.

7. Verwendung von Wirkstoffmischungen und Schädlingsbekämpfungsmitteln gemäß den Ansprüchen 1 bis 6 zur Bekämpfung von Arthropoden im Haushalt- und Hygienebereich.

8. Verfahren zur Herstellung der Schädlingsbekämpfungsmitteln gemäß den Ansprüchen 5 und 6, dadurch gekennzeichnet, daß man Wirkstoffmischungen gemäß den Ansprüchen 1 bis 4 mit inerten Verdünnungsmitteln, Formulierhilfsmitteln und gegebenenfalls Treibgasen mischt und im Falle von Aerosolen die Mischungen gegebenenfalls in Sprühdosen abfüllt.

**Revendications**

1. Mélanges de substances actives consistant en
I) un pyréthroïde de formule

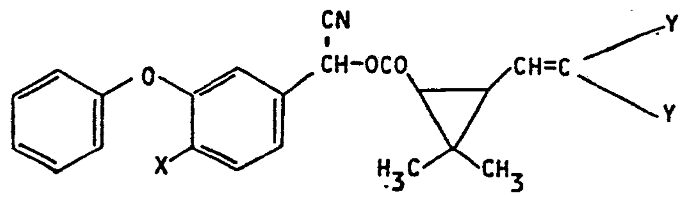

(I)

dans laquelle
a) X représente le fluor et Y le chlore ("substance active 1") ou
b) X représente l'hydrogène et Y le brome ("substance active 2"),
y compris dans chaque cas les stéréoisomères (énantiomères et diastéréoisomères) de ce composé et leurs mélanges, et
II) le phosphate d'O,O-diméthyle et d'O-(2,2,-dichlorovinyle) ("substance active 3") et
III) le N-méthylcarbamate de 2-isopropoxyphényle ("substance active 4").

2. Mélanges de substances actives selon la revendication 1, dans lesquels les proportions relatives (en parties en poids) des substances actives 1 ou 2, 3 et 4 sont situées entre 1:100:100 et 1:1:1.

3. Mélanges de substances actives selon la revendication 1, dans lesquels les proportions relatives (parties en poids) des substances actives 1 ou 2, 3 et 4 se situent entre 1:100:100 et 1:10:10.

4. Mélanges de substances actives selon la revendication 1, dans lesquels les proportions relatives (parties en poids) des substances actives 1 ou 2, 3 et 4 se situent aux environs de 1:20:20, aux environs de 1:20:40, aux environs de 1:50:100 ou aux environs de 1:100:100.

5. Produit pesticide pour la maison et le domaine de l'hygiène, caractérisé en ce qu'il contient un mélange de substances actives selon les revendications 1 à 4.

6. Aérosols et produits huileux à pulvériser pour le foyer et le domaine de l'hygiène, caractérisés en ce qu'ils contiennent un mélange de substances actives selon les revendications 1 à 4.

7. Utilisation des mélanges de substances actives et des produits pesticides selon les revendications 1 à 6 dans la lutte contre les arthropodes au foyer et dans le domaine de l'hygiène.

8. Procédé de préparation des produits pesticides selon les revendications 5 et 6, caractérisé en ce que l'on ajoute aux mélanges de substances actives selon les revendications 1 à 4 des diluants inertes, des produits auxiliaires de formulation et le cas échéant des gaz propulseurs et, dans le cas des aérosols, on introduit les mélanges éventuellement dans des boîtes atomiseuses.